# EUROPEAN PATENT APPLICATION

(11) **EP 0 949 487 A1**
(43) Date of publication of application: **13.10.1999**
(21) Application number: 98106420.7
(22) Date of filing: 08.04.1998
(51) Int. Cl.: G01F 23/00, G01F 23/76, G01F 23/74

(54) **Floating switch capable of indicating the level of a high density liquid in a tank suitable to contain a low density liquid**

(71) Applicant: Energy S.N.C. di Zavalloni Pier Angelo, 47042 Cesenatico (Forli) (IT)
(72) Inventor: Pieri, Paolo, 47042 Cesenatico (Forli) (IT)
(74) Representative: Rinaldi, Carlo

(57) **Abstract**

A switch capable of indicating the level of a high density liquid in a tank suitable for containing a low density liquid; the float (10) is heavier than the low density liquid (2) and lighter than the high density liquid (3); the float (10) sliding along a guiding tube (11) between a lower limit stop (12) and an upper limit stop (13); when the float (10) is in contact with the lower limit stop (12), the switch (9) maintains a control circuit of an actuator open, which is, therefore, standing; the tank (1) presents an outlet mouthpiece (5) connected to a duct (6) flowing into a pump (7), the outlet of which is connected to a feeding pipe (8) of a central or thermal station.

## Description

### BACKGROUND OF THE INVENTION

The present invention relates to a floating switch capable of indicating the level of a high density liquid in a tank suitable for containing a low density liquid. More precisely, the invention refers to a floating switch for an underground tank for hydrocarbons; the switch being connected to an electrical circuit acting on a device capable of signalling the excessive level or intercepting the feeding of the liquid.

An underground tank for hydrocarbons is used for feeding a central or thermal station, the tank being fitted with an inlet for its filling and an outlet connected to a pump for sending the liquid to the station.

The presence of water in the subsurface, particularly abundant after a rain or a snowfall, facilitates the infiltration of this liquid into the tank; after such events the tank does not only contain the hydrocarbons for the station, but also water; a small quantity of water can be tolerated, since it does not damage the correct functioning of the station, but a quantity reaching the level of the tank outlet is dangerous, since the water can be sent to the station and exposes the environment to a greater danger of pollution.

### STAND OF THE TECHNIQUE

US-A - 5,713,697 discloses an apparatus for collecting floatable liquids such as oil and gasoline, in particular in the case of oil-contaminated or gasoline-contaminated water. The apparatus includes a collecting container which is vat-like or cylindrical and which is immersed into the water surface; an annular float on which the collecting container is at least partly borne in its upper region; an inlet opening for the liquid which is to be collected and arranged directly beneath the float; at least one delivery pump for transporting the liquid in the collecting container to a disposal station, the float having a buoyancy arrangement such that the float substantially rests on the water surface; a funnel-like intake trough which encloses the collecting container and is located beneath the float, the trough forming, along with the float, a defined intake gap which corresponds to the width of the liquid stream which is to be taken in, the intake gap between the underside of the float and the upper side of the intake trough being variable in its width and being less than or equal to 300 mm.

US- A- 5,577,526 relates to a float valve for a fuel tank; the valve comprises an upper float chamber, a middle chamber, and a lower float chamber housed in a case that is fixed to the upper wall of a fuel tank. The upper float chamber includes a first communication hole that directly communicates with an air bleed duct. The upper float that can block that first communication hole when the tank is full. The middle chamber includes a third communication hole communicating with the lower float chamber which has a first air hole located at a position corresponding to the desired fuel level for a full tank. The lower float chamber includes a lower float than can block the third communication hole, and a second air hole which is located below the lower float. Because the air passages and float activation allow air to be vented as the fuel level rises in the tank fueling proceeds smoothly and drastic increases in internal pressure, that will stop fueling prematurely can be avoided.

In these and in other available documents of prior art equipments, tanks or housings for hydrocarbons are described being fitted with floats for controlling the level of the infiltrated water; mainly, these floats present the following disadvantages:
A- The body of the float has a specific weight allowing the floating on all liquids of the housings; in this way, it is not possible to distinguish the level reached by a particular liquid;
B- The float introduces an error in the measuring the level of at least one of the liquids because of the air being vented in its surface, this air changing the specific weight of the float;
C- The response of the float to a quick increasing of the level of the liquid is slow, therefore, the undesired liquid can invade the tank after the signal of the increasing of the level is received;
D- The displacements of the levels of the various liquids depend on the displacements of the float; therefore, the detecting of the position of the float by means of sensors is not sufficiently exact.

### AIM OF THE INVENTION

The purpose of the present invention is to remedy these defects.
The invention, as claimed, solves the problem of creating a floating switch capable of indicating the level of a high density liquid in a tank suitable for containing a low density liquid. The level of the high density liquid is measured by means of a float the specific gravity of which is higher than the specific gravity of the low density liquid and lower than the specific gravity of the high density liquid.

The advantages offered by the present invention are mainly that the float moves between two limit stops located on the same vertical; the float is secured to guiding means to move between a lower limit stop and an upper limit stop; when the level of the high density liquid is tolerable, i.e. considerably lower than the outlet mouthpiece of the tank, the float is in contact with the lower limit stop, while, when the level of the high density liquid is near the outlet mouthpiece, the float is in contact with the upper limit stop; this placement of the limit stops allows the immediate detecting of the level of the high density liquid and consequently, the immediate signalling or the solicit control by means of an electrical circuit suitable for signalling or preventing the rising of the level of the high density liquid over the outlet mouthpiece of the tank in order not to compromise the correct working of the thermal station; in addition, a Covering of the float is used for adapting the specific weight of the same float for the specific gravity of the low density liquid contained in the tank.

### BRIEF DESCRIPTION OF THE DRAWINGS

Other advantages, features and aims of the invention, may be more readily understood by referring to the accompanying drawings, which concern a preferred embodiment, in which:
Fig.1 shows the switch located in a tank in which the level of the high density liquid is tolerable;
Fig.2 represents the switch of Fig.1 located in the tank in which the level of the high density liquid is near the outlet mouthpiece of the same tank;
Fig.3 is a front view of a magnetic switch with its main components; and
Fig.4 is a front view of the switch with the float fitted with a covering for changing its specific weight.

### DESCRIPTION OF A PREFERRED EMBODIMENT OF THE SWITCH

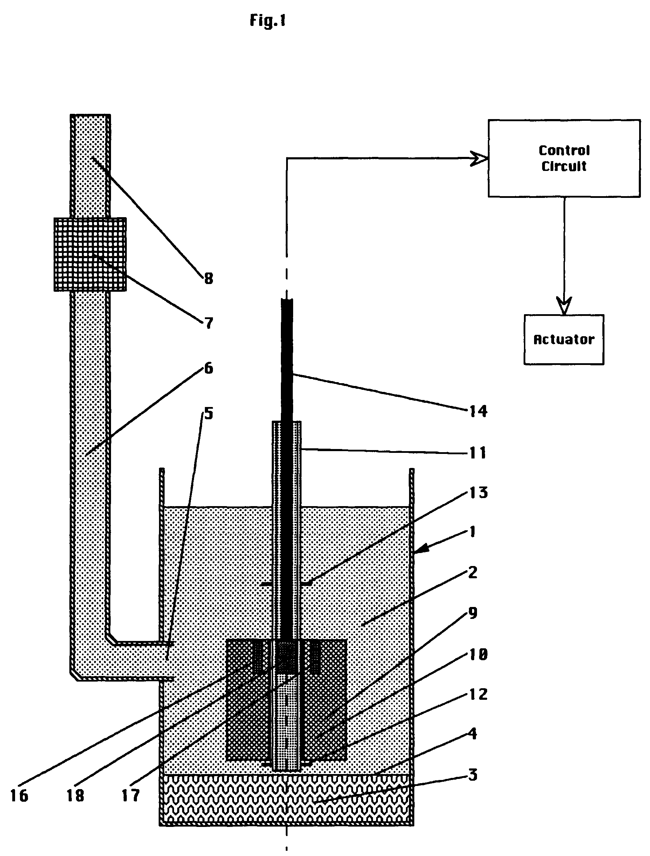

Fig.1 schematically shows an underground tank 1 in which two non miscible liquids are provided having different specific gravity; the first liquid 2 is lighter than the second liquid 3; a flat surface 4 separates the light liquid 2 from the heavy liquid 3.
The tank 1 is filled by means of an inlet mouthpiece (not shown), while the outlet mouthpiece 5 of the tank 1 is connected to a duct 6 flowing into a pump 7, the outlet of which is connected to a feeding pipe 8 of a central or thermal station (not shown).
A floating switch 9 is found inside the tank 1 near the flat surface 4 separating the light liquid 2 from the heavy liquid 3; the float 10 of the switch 9 can slide along a guiding tube 11 between two limit stops 12, 13; the positions of the lower limit stop 12 and of the upper limit stop 13 will be defined below.
Inside the guiding tube 11 a cable 14 is provided being used for the electrical connection of the switch 9 with the inlet of a control circuit, the outlet of which is connected to an actuator.
The aims and functioning of the control circuit and the actuator will be disclosed below.
The switch 9 opens or closes the control circuit; when the switch 9 is in contact with the lower limit stop 12 the control circuit is open; vice versa, when the switch 9 is in contact with the upper limit stop 13 the control circuit is closed.

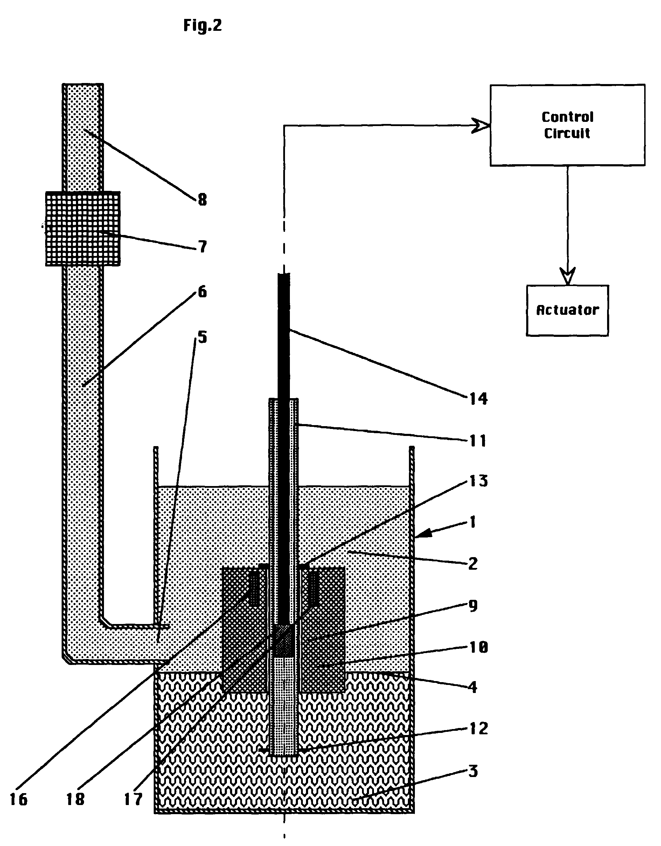

The float 10 presents a specific gravity higher than the specific gravity of the low density liquid 2 and a specific gravity lower than the specific gravity of the high density liquid 3; the float 10 floats on the liquid 3, while, it sinks in the liquid 2 and, when the level of the liquid 3 is tolerable, i.e. considerably lower than the outlet mouthpiece 5 (Fig.1), the float 10 of the switch 9 is in contact with the lower limit stop 12, vice versa, when the level of the liquid 3 is near the outlet mouthpiece 5 (Fig.2), the float 10 is in contact with the upper limit stop 13.

In the first case the switch 9 opens or maintains the control circuit open, in the second case it closes the same circuit.

The open control circuit does not send current to the actuator which remains inactive; the closed control circuit sends current to the actuator which works properly.

The actuator is chosen considering the requirements of the central or thermal station fed by the liquid 2, the actuator beginning to work when the control circuit is closed by the switch 9 for supplying the current; a first actuator consists of a luminous or acoustic signaller signalling the dangerous state of the level of the liquid 3 to the controllers of the station; a second actuator consists of an on-off valve capable of stopping the flow rate of the liquid crossing the feeding pipe 8; a third actuator consists of a device disconnecting the electrical feeding of the pump 7.

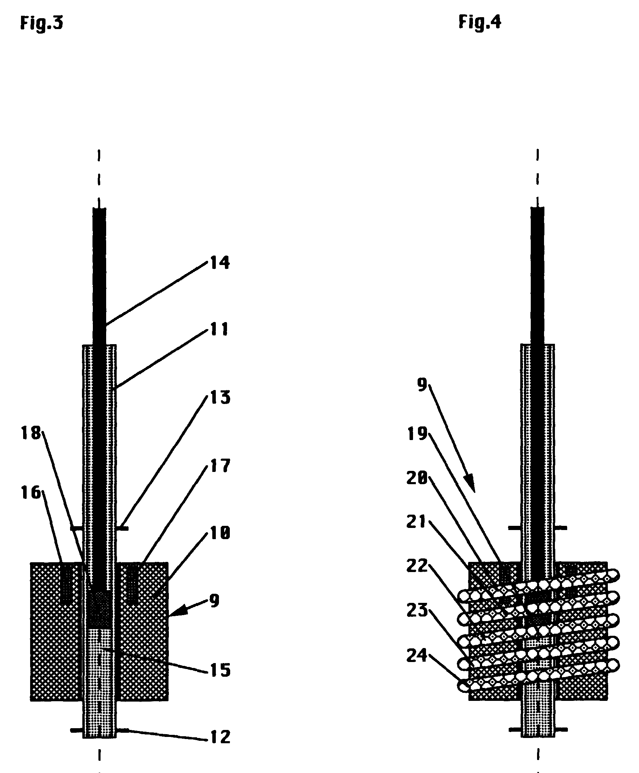

Another actuator consists of an evacuation pump connected to the lower zone of the tank 1, the pump beginning to work when the control circuit feeds the actuator.
The switch 9 shown in Fig.3 comprises the float 10 sliding along the guiding tube 11 between both limit stops 12, 13; the cable 14 connecting the switch 9 to the entrance of the control circuit is wrapped up by a mass 15 of sealing resin contained by the tube 11; two permanent magnets 16, 17 are located inside the float 10 and a magnetic sensor 18 is found inside the guiding tube 11 being in contact with the cable 14.

When the sensor 18 is closed within the magnetic field of the permanent magnets 16, 17, the switch 9 maintains the control circuit open; on the contrary, when the sensor 18 is out of the magnetic field of the permanent magnets 16, 17 the switch 9 closes the control circuit.

Analogous measuring devices are disclosed in US-A-5,729,128 and other documents of prior art; these devices are further available in the market; therefore, we do not think it necessary to describe their structure and working more in detail.

A covering 19 is wrapped around the float 10 of the switch 9 shown in Fig.4 for changing the specific weight of the float 10; this covering is made by turns 20, 21, 22, 23, 24 adhering to the external surface of the float 10; the turns 20, 21, 22, 23, 24 consist of a heavier material than the material of the float 10. The number of the turns and the material of which the turns consist allow to obtain floats with variable specific weight to control the level of the high density liquid in a tank capable of containing liquids with different specific gravity feeding the central station.

## Claims

1. Floating switch capable of indicating the level of a high density liquid in a tank suitable for containing a low density liquid, the switch being characterised by the following features:
the float (10) is heavier than the low density liquid (2) and lighter than the high density liquid (3);
the float (10) is secured to guiding means (11) to move between a lower limit stop (12) and a upper limit stop (13);
when the level of the liquid (3) is tolerable, i.e. considerably lower than the outlet mouthpiece (5) of the tank (1), the float (10) is in contact with the lower limit stop (12);
vice versa, when the level of the liquid (3) is near the outlet mouthpiece (5), the float (10) is in contact with the upper limit stop (13);
when the float (10) is in contact with the lower limit stop (12), the switch (9) opens a control circuit of an actuator which, therefore, is standing;
when the float (10) is in contact with the lower limit stop (13), the switch (9) closes the control circuit of the actuator which works properly;
a covering (19) of the float (10) is further provided for adapting the specific weight of the float (10) for the specific gravity of the low density liquid (2) contained in the tank (1);
the tank (1) presenting an outlet mouthpiece (5) connected to a duct (6) flowing into a pump (7), the outlet of which is connected to a pipe (8) feeding a central or thermal station.

2. Floating switch as in claim 1, wherein the guiding means (11) consist of a guiding tube (11) containing a cable (14) electrically connecting the switch (9) to the entrance of the control circuit of the actuator.

3. Floating switch as in claim 1, wherein the covering (19) of the float (10) consists of turns (20,21,22,23,24) which adhere to the external surface of the float (10).

4. Floating switch as in claim 3, wherein the turns (20,21, 22,23,24) consist of a heavier material than the material of the float (10); the number of the turns (20,21,22,23,24) and the material of which the turns (20,21,22,23,24) consist allow to obtain floats (10) with variable specific weight in order to control the level of the high density liquid (3) in a tank (1) suitable for containing liquids with different specific gravity feeding the central station.

5. Floating switch as in claim 1, wherein the switch (9) consists of the float (10) sliding along the guiding tube (11) between two limit stops (12,13); the cable (14) connecting the switch (9) to the entrance of the control circuit is wrapped up by a mass (15) of sealing resin contained by the tube (11); two permanent magnets (16,17) are located inside the float (10) and a magnetic sensor (18) is found inside the guiding tube (11) being in contact with the cable (14).

6. Floating switch as in claim 5, wherein when the magnetic sensor (18) is closed within the magnetic field of the permanent magnets (16,17), the switch (9) maintains the control circuit open; on the contrary, when the sensor (18) is out of the magnetic field of the permanent magnets (16,17) the switch (9) closes the control circuit.

7. Floating switch as in claim 1, wherein the actuator consists of a luminous or acoustic signaller signalling the dangerous state of the level of the liquid (3) to the controllers of the station.

8. Floating switch as in claim 1, wherein the actuator consists of an on-off valve capable of stopping the flow rate of the liquid crossing the feeding pipe (8).

9. Floating switch as in claim 1, wherein the actuator consists of a device disconnecting the electrical feeding of the pump (7).

10. Floating switch as in claim 1, wherein the actuator consists of an evacuation pump connected to the lower zone of the tank (1), the pump beginning to work when the control circuit feeds the actuator.
